# EUROPEAN PATENT APPLICATION

(11) **EP 0 529 664 A2**
(43) Date of publication of application: **03.03.1993**
(21) Application number: 92114774.0
(22) Date of filing: 28.08.1992
(51) Int. Cl.: B62J 39/00, B62M 25/08

(54) **A speed change system for a bicycle or the like**

(30) Priority: 30.08.1991 DE 4128866
(71) Applicant: Fichtel & Sachs AG, D-97419 Schweinfurt (DE)
(72) Inventor: Dumbser, Gerhard, W-8721 Niederwerrn (DE); Vikuk, Johann, W-8720 Schweinfurt (DE); Lutz, Manfred, W-8720 Schweinfurt (DE); Thein, Albert, W-8728 Hassfurt (DE); Foik, Reiner, W-8720 Schweinfurt (DE)
(74) Representative: Weickmann, Heinrich, Dipl.-Ing.

(57) **Abstract**

According to an illustrative example of the invention, a bicycle is provided with a gear change mechanism. This gear change mechanism is changeable to different speeds by a mechanism mover. This mechanism mover is connected with an electrically powered positioning device through a flexible Bowden cable. The electrically powered positioning device is controlled from a keyboard provided on a handle bar of the bicycle.

## Description

### BACKGROUND OF THE INVENTION

This invention relates to a speed change system for a bicycle or a similar vehicle. The term "speed change system" comprises both hub-integrated speed change systems in the form of so-called multi-speed hubs and chain-operated speed change systems in which a torque transmitting chain is displaced between a plurality of sprockets of a group of sprockets which may be either allocated to a driver member of a free wheel hub or may be provided on a pedal shaft of a bicycle.

Classic speed change systems are mechanically operable by hand from a switch provided on the bicycle frame or preferably on a handle bar of the respective bicycle. Moreover, it is known to effect the speed change in speed change systems by electric power units. In this case, the driver gives his speed change orders to an electric input unit which controls the movement of an electrically driven power device acting onto a gear change element of a respective gear change mechanism.

### STATEMENT OF THE PRIOR ART

From US Patent 3,919,891 a chain shift mechanism is known in which an electric motor acts through a transmission gear onto the parallelogram linkage. This parallelogram linkage is provided with a chain mover wheel which can be moved through the parallelogram linkage substantially along a path of movement parallel to the axis of a wheel hub. The movement of the parallogram linkage is obtained by cam control. The electric motor, the allocated transmission gear and the cam shaft are integrated into a unit which can be assembled with the bicycle. This unit is completely different from classic manually operated gear change mechanisms. The unit comprising the electric motor, the reduction gear and the cam shaft requires considerable space, and it is difficult to provide this unit with an acceptable appearance. The expenses for developing and manufacturing such a unit are high.

From German Patent 36 31 481 C2 a further electrically operated power unit is known which includes a chain thrower wheel to be moved by an electric motor through a reduction gear. This device is also complicated and expensive in development and manufacturing. Moreover, the unit requires considerable space, and it is difficult to provide this unit with an acceptable optical appearance.

### OBJECT OF THE INVENTION

It is an object of the present invention to provide an electrically operated speed change system for a bicycle which requires only little space and can be mounted on the respective bicycles at locations which are readily available.

It is a further object of the present invention to provide a speed change system the components of which do not deteriorate the outward appearance expected by the consumer.

It is a further object of the present invention to provide a speed change system in which essential components of classic manually operated speed change systems can be used in combination with an additional electrical equipment.

It is a further object of the present invention to provide a speed change system which can be based on classic manually operated speed change systems and must only be combined with an electrically operated positioning device and a control unit for such a positioning device.

It is a further object of the present invention to provide an electrically operated positioning device and a remote control unit which can be exchanged in an existing bicycle aginst existing mechanical speed change means.

It is a further object of the present invention to provide an electrically operated positioning device which can easily be combined with different types of gear change mechanisms.

It is a further object of the present invention to provide an electrically operated positioning device of such a design that a basically identic electrically operated positioning device can be used for gear change mechanisms in which two or more different mechanism mover elements must be moved for obtaining different speeds.

The term "speed" is not to be understood in the sense of velocity. It is rather to be understood in the sense of transmission ratio.

### SUMMARY OF THE INVENTION

A speed change system for a bicycle or a similar vehicle comprises at least one gear change mechanism and at least one remote control unit accessible to a driver during driving operation. Speed change signal transmission means are provided between said at least one remote control unit and said at least one gear change mechanism. The gear change mechanism comprises a mechanism mover element movable towards a plurality of mover element positions corresponding to respective speeds. The speed change signal transmission means comprise at least one electrically powered positioning device. This positioning device has a positioning member connected for substantially synchronized movement with the mechanism mover element. The positioning member is positionable by electric power into a plurality of gear change positions under control by said remote control unit. The mechanism mover element is movable into respective mover element positons in response to the positioning member being positioned into individual ones of said gear change positions. Flexible connecting means are provided for connecting the positioning member and the mechanism mover element.

Alternatively, mechanical pulling means or mechanical push-pull means may be provided as connecting means between the positioning member and the mechanism mover element. Such pulling means or push-pull means are not necessarily flexible.

Preferably, the positioning member and the mechanism mover element are mechanically connected by one of a wire element and a cable element such as a Bowden wire element.

In all above-mentioned cases, the gear change mechanism may be of classic design as used for manual operation.

The electrically powered positioning device may comprise an electric motor, an electronic positioning device control unit and a power unit. Positioning gear means may be provided between the electric motor and the positioning member. The electric motor may be driven by a DC voltage source such as a dry cell. The electric motor may be of different type. One can use an electric motor which moves step-wise with predetermined angular steps. One can also use an electric motor which has a predetermined angular velocity and can be brought to a predetermined position by selecting predetermined periods of rotation. It is further possible to use electric motors which are controlled by feed-back of an electric signal representing the actual position of a motor-driven part. In such case, the electric signal fed back from e. g. a positioning sensor is compared with a signal provided by electric control means and representing a desired position of said part. The electric signals are compared in a comparator and the comparator stops the electric motor as soon as a certain relationship exists between the two signals.

The positioning gear means should be self-locking positioning gear means permitting movement of said positioning member by said electric motor through said positioning gear means and prohibiting movement of said electric motor by said positioning member though said positioning gear means. The advantage of self-locking gear means is that a selected position when once obtained is maintained without charging the electric motor. Such, the power consumption of the motor is restricted to the periods of positioning. The direction of rotation of the motor must be changeable in order to move the mechanism mover element forwards and backwards.

The electric power unit may be separable from the electrically powered positioning device. This is a protection against thieves. The driver can remove the electric power unit from the bicycle when he leaves the bicycle so that the bicycle is not operable thereafter and the value of the bicycle is reduced.

The electrically powered positioning device may have an external shape of a rod or a tube, preferably with cylindrical cross-section and preferably with a diameter smaller or equal only little larger than the diameter of an adjacent structural rod member of the respective bicycle. Such a tube- or rod-shaped positioning device can be located at many selectable locations of a bicycle frame.

The fastening means for fastening the positioning device may be of conventional design as used for fastening pumps or lights or locks to a bicycle frame. The fastening means may be clamping fastening means. They may also be welded or soldered to the bicycle frame.

A rod-shaped electrically powered positioning device may be preferably fastened to a structural member of the vehicle frame such that the axis of the device and the axis of the structural member are substantially parallel or coaxial. In such a case, the positioning member may be movable substantially parallel to or along an axis of said tube- or rod-shaped positioning device.

The electrically powered positioning device may comprise two subunits, a first subunit including an electric motor and said positioning member and a second subunit including an electric power unit. The second subunit may be separably fastened to at least one of the first subunit and a structural member carrying said first subunit. Such, the second subunit is separable from and reassemblable with said at least one of said first subunit and said structural member of the bicycle, substantially without the aid of a tool. This allows the driver to take the second subunit from the bicycle when he leaves the bicycle. Further, the exchange of a battery or a cell is facilitated.

The speed change system may comprise at least two gear change mechanisms with respective mechanism mover elements and a corresponding number of positioning members. The positioning members may be positionable by a corresponding number of electric motors. These electric motors may be operatively connected with at least one of a common power unit, a common positioning device control unit and a common remote control unit. In such a case, it is necessary to provide electric connections between the common components and the individual motors.

The positioning device control unit may be connected with a comparator unit. In such a case, the positioning device control unit provides a nominal value signal responsive to a selected speed selected by said remote control unit. A positioning sensor is allocated to the mechanism mover element or the positioning member or a further movable member movable in substantial synchronization with said mechanism mover element or said positioning member. The positioning sensor provides an actual value signal in response to a respective sensed position. This nominal value signal and said actual value signal are compared by the comparator unit. The comparator unit provides a stop signal for the positioning device at a predetermined relationship of said nominal value signal and said actual value signal. The positioning sensor should be located as near as possible to the mechanism mover element in order to exclude positioning errors.

The positioning device can also comprise a calibration unit permitting manual control of the positioning device, such that upon selection of a predetermined speed at said remote control unit said electrical positioning device moves said mechanism mover element to a position corresponding to the selected speed. In such a case, all problems of adjusting the gear change mechanism can be solved by the electric positioning device without mechanical adjusting means.

The remote control unit may comprise an electronic keyboard. This electronic keyboard is connected with the positioning device through electronic data transmission means. The electronic keyboard may e. g. comprise a plurality of push buttons corresponding to the respective speeds.

Alternatively, the remote control unit may comprise a mechanical switch. This mechanical switch is connected by mechanical transmission means, such as a Bowden cable, with a signal converter allocated to the positioning device. This signal converter is to convert mechanical positioning signals supplied by said mechanical switch through said mechanical transmission means to the signal converter into electronic signals. These electronic signals are fed to the positioning device.

A liquid crystal display unit may be provided for indicating an actual condition of a t least one of the remote control unit, the positioning device and the gear change mechanism.

The gear change mechanism may comprise hub gear means provided inside a free wheel driving hub of a driven wheel. These hub gear means may be switchable to different transmission ratios in response to movement of the mechanism mover element.

Alternatively, the gear change mechanism may comprise a chain drive unit with a driving chain. This driving chain is in driving engagement with a pedal-side sprocket unit and with a wheel-side sprocket unit. At least one of the sprocket units comprises a plurality of sprockets. The mechanism mover element is engageable with the chain for displacing the chain between different sprockets of the respective sprocket unit in response to selection of different speeds at said remote control unit.

The mechanical connection means between the positioning member and the mechanism mover element may easily be separable from each other by use of common connection means such as Bowden cable nipples. This allows an easy retrofit of the positioning device with a bicycle equipped with a classic gear change mechanism.

Preferably, the positioning device is mounted on a structural member of the usual backward triangular frame unit of a bicycle. This is true both for bicycles with a hub-integrated gear change mechanism and for bicycles with a chain-operated gear change mechanism. The separability of the positioning device into a motor unit and a power unit allows the use of one single power subunit when two or more motor subunits are necessary for cooperation with a corresponding plurality of mechanism mover elements. Thus, weight is saved.

Preferably, the electrically powered positioning device is fastened to one of the horizontal frame bars of a backward triangular frame part of a bicycle.

Electric speed change signal transmission means may be used as or combined with power supply lines extending between the different components of the speed change system.

The idea of electromotoric calibration of the mechanism mover element is regarded as an invention independent of the flexible connection between the mechanism mover element and the positioning member.

The various features of novelty which characterize the invention are pointed out with particularity in the claims annexed to and forming a part of the disclosure. For a better understanding of the invention, its operating advantages and specific objects attained by its use, reference shoudl be had to the accompanying drawings and descriptive matter in which there are illustrated and described preferred embodiments of the invention.

### BRIEF DESCRIPTION OF THE DRAWINGS

The invention will be explained in greater detail hereafter with reference to embodiments shown in the accompanying drawings in which
- Fig. 1: shows a partial view of a bicycle with a speed change system of the present invention;
- Fig. 2: shows an electrically powered positioning device of the speed change system illustrated in Fig. 1;
- Fig. 3: shows a diagrammatic view of a speed change system based on chain displacement between a plurality of sprockets;
- Fig. 4: shows a diagrammatic view of a speed change system including the electronic components thereof;
- Fig. 5: shows a similar view as Fig. 5 with a modified electronic circuitry and
- Fig. 6: shows a speed change system with a hub integrated gear unit.

### DETAILED DESCRIPTION OF THE PREFERRED EMBODIMENTS

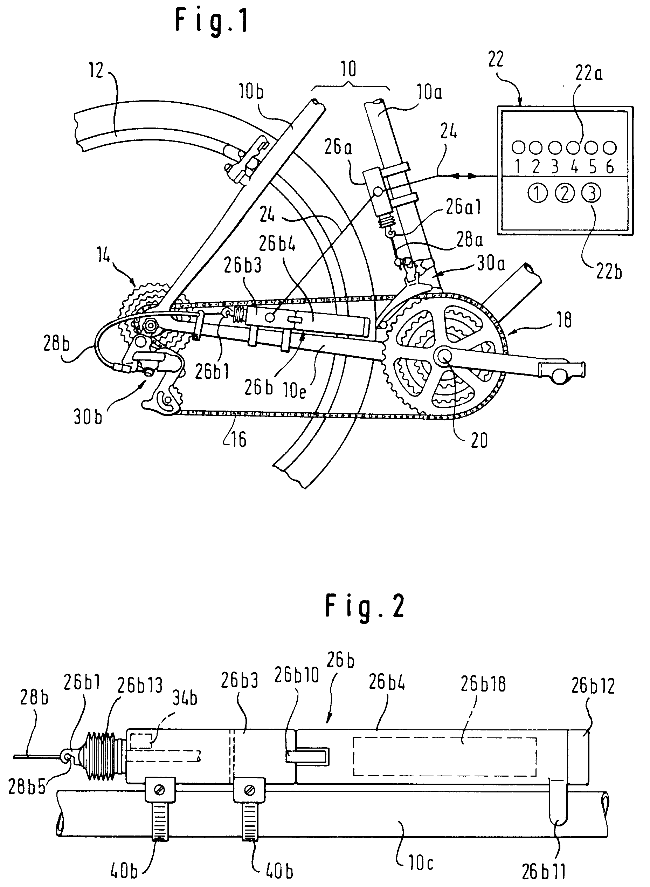

In Fig. 1, the framework of a bicycle is designated generally by 10. This framework comprises in triangular arrangement three structural members 10a, 10b and 10c. Back wheel 12 of the bicycle is mounted at the rear end of the structure 10. The wheel comprises a free wheel unit (not shown) and a group 14 of sprockets which are capable of driving the wheel 12 through the free wheel unit. A chain 16 extends around a respective one of the sprockets 14 and about a respective one of a further group of sprockets 18 which are mounted on a pedal shaft 20. The transmission or reduction ratio of the chain drive between the pedal shaft 20 and the wheel 12 can be varied by displacement of the chain 16 between different sprockets of the group 14 and/or by displacement of the chain 16 between different sprockets of the group 18. One can see from Fig. 1 a remote control unit 22 illustrated as a keyboard with two groups of keys 22a and 22b. The remote control unit 22 is in operative connection through a signal transmission line 24 with a first electrically powered positioning device 26a and a second electrically powered positioning device 26b. The positioning device 26b comprises a hook-shaped positioning member 26b1 which is connected through a Bowden cable 28b and nipple 28b5 with a gear change mechanism 30b in the form of a chain thrower mechanism capable of displacing the chain 16 between different ones of six sprockets of the group 14. The respective sprocket can be selected by contacting one of the keys 1 to 6 of the group of keys 22a. The positioning device 26a is capable of displacing the chain 16 between different ones of three sprockets of the group of sprockets 18 mounted on the pedal shaft 20 through a gear change mechanism 30a. The positioning device 26a comprises a hook-shaped mechanism mover element 26a1 which is connected with the gear change mechanism 30a through a wire 28a.

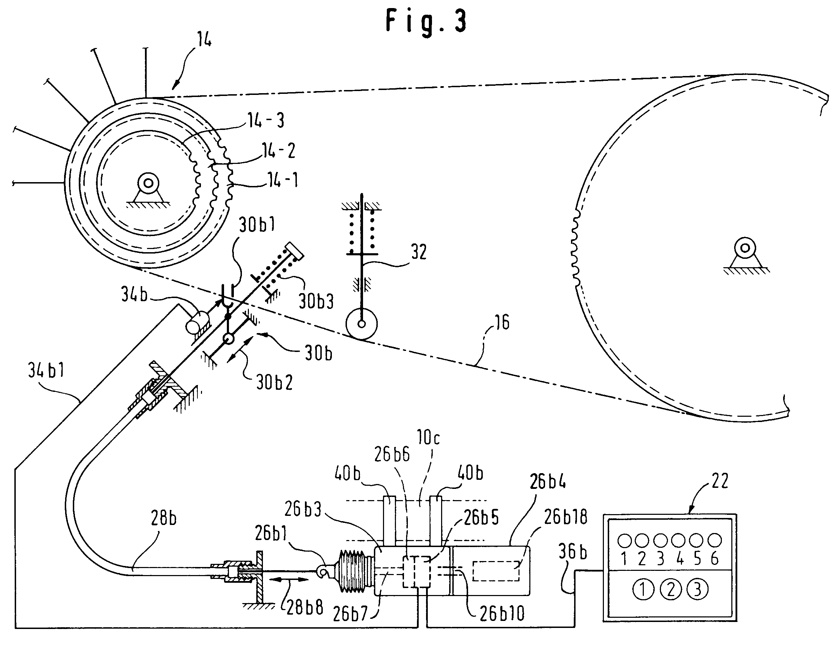

Fig. 2 shows the fixation of the positioning device 26b on the tube-shaped structural member 10c. This positioning device 26b comprises a first subunit 26b3 and a second subunit 26b4. The first subunit 26b3 accommodates, as more clearly shown in Fig. 3, a positioning device control unit 26b5 and an electric motor 26b6. The electric motor 26b6 is connected through a worm gear unit 26b7 with the hook-shaped positioning member 26b1. The hook-shaped positioning member 26b1 is connected through the core wire of theBowden cable 28b with a mover element 30b1 of the gear change mechanism 30b. The mechanism mover element 30b1 is a chain thrower engaging the chain 16. This mechanism mover element 30b1 is movable through the Bowden cable 28b along the arrow 30b2 against the action of a helical compression spring 30b3. By movement of the mechanism mover element 30b1 along the arrow 30b2 the chain 16 can be brought into engagement with different sprockets 14-1, 14-2 and 14-3 (there are only indicated three sprockets for a simplified illustration; in truth, there are six sprockets provided within the group of sprockets 14 as shown in Fig. 1). The chain 16 is loaded by a tensioning device 32 which compensates for the different diameters of the sprockets 14-1, 14-2 and 14-3, which are provided with different numbers of teeth. The position of the positioning member 26b1 is varied by the motor 26b6 through the worm gear 26b7 under the control of an electronic positioning device control unit 26b5 in response to the speed selected by the remote control unit 22. Movement of the positioning member 26b1 along the arrow 26b8 results in a substantially synchronized movement of the mechanism mover element 30b1. The movement of the mechanism mover element 30b1 along the arrow 30b2 is sensed by a sensing unit 34b. The sensed value of the sensing unit 34b is fed back through a feed-back line 34b1 to the positioning device control unit 26b5. As soon as the positioning signal fed to the positioning device control unit 26b5 through data transmission line 36b from the remote control unit 22 (nominal value signal) corresponds to the signal transmitted from the sensing unit 34b via the feed back line 34b1 to the positioning device control unit 26b5 (actual value signal), a comparator allocated to the positioning device control unit 26b5 issues a signal to the electric motor 26b6 such that the electric motor 26b6 is stopped. Thus, the position of the mechanism mover element 30b1 corresponds then to the speed selected in the remote control unit 22, and the chain 16 is displaced through the mechanism mover element 30b1 to the selected sprocket.

As one can see from Fig. 2, the subunit 26b3 is fastened to the structural member 10c by clamping hands 40b. The subunit 26b4 contains an electric battery feeding the electric motor 26b6 and the electronic positioning device control unit 26b5. The remote control unit 22 may also be powered by the battery within the unit 26b4 through the data transmission line 36b or a further line parallel thereto. The subunit 26b4 containing the battery is connected to the subunit 26b3 by plug connector means 26b10 and by a spring clamp 26b11 or other. The subunit 26b4 can easily be separated from the subunit 26b3 for replacement of the battery within the subunit 26b4. The subunit 26b4 is provided with a cover member 26b12 which allows easy replacement of the battery when consumed.

It is to he noted that the positioning member 26b1 is covered by an elastic protection bellow 26b13.

It is further to he noted that the sensing unit 34b can be replaced by a sensing unit located near and responsive to the position of the positioning member 26b1 as indicated in Fig. 2. The electronic circuitry remains the same. Such a replacement has the only effect that the positioning of the positioning member 16b1 is under strict control. It may be of considerable advantage, however, to have the position of the mechanism mover element 30b1 under strict control, such as indicated in Fig. 3. The advantage is that a most precise control of the position of the mechanism mover element is obtained when the sensing unit 34b senses the position of the mechanism mover element 30b1, because errors due to elongation of the Bowden cable 28b are excluded.

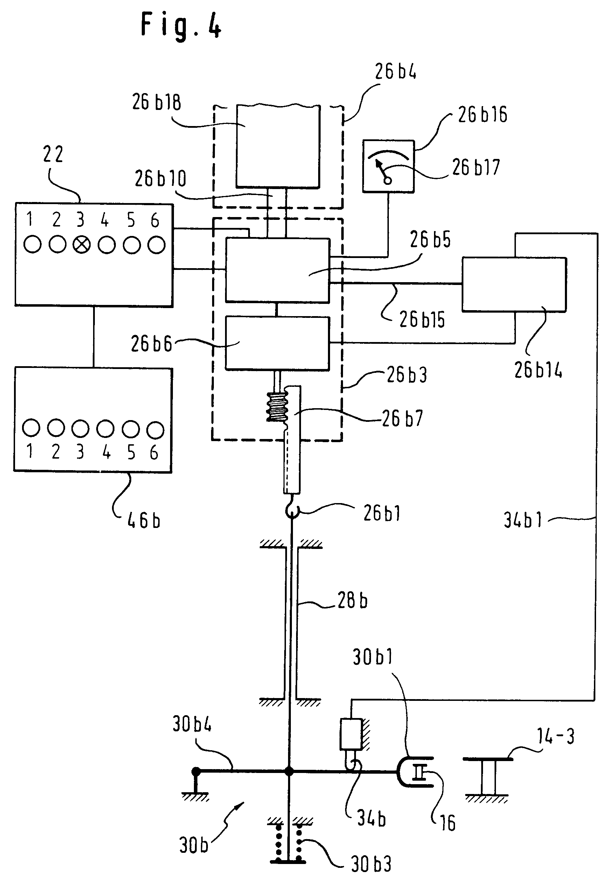

A more detailed circuitry is shown in Fig. 4. Analogous parts are designated with the same reference numerals as in Figs. 1 to 3.

In Fig. 4, the mechanism mover element 30b1 is diagrammatically indicated as being carried by a lever member 30b4, which is prestressed by the spring 30b3. The sensing unit 34b is in engagement with the lever member 30b4. The feed-back line 34b1 runs from the sensing unit 34b to a comparator 26b14. The comparator 26b14 receives through data transmission line 26b15 a signal from the positioning device control unit 26b5. The signal received by the data transmission line 26b15 corresponds to a nominal value or desired value of the mechanism mover element 30b1 and is responsive to the respective key set within the remote control unit 22. The actual value signal transmitted to the comparator 26b14 from the sensing unit 34b through the feed-back line 34b1 in response to the position of the mechanism mover element 30b1 is compared within the comparator 26b14 with the nominal value signal received through the data transmission line 26b15. When a predetermined relationship between the nominal value signal and the actual value signal is achieved, e. g. when the difference between the nominal value signal and the actual value signal is 0, a stopping signal is issued by the comparator 26b14 and is received by the motor 26b6 so that the motor is stopped. Then, the mechanism mover element 30b1 is positioned in the correct position corresponding to the respectively set key 3 of the remote control unit 22. This is illustrated in Fig. 4 by the mechanism mover element 30b1 being opposite to the diagrammatically indicated sprocket 14-3.

When the speed change system has been mounted on the bicycle, a preliminary adjustment is necessary such that when e. g. the key 3 of the remote control unit 22 has been set desiring the chain to be displaced to the sprocket 14-3, the mechanism mover element 30b1 is moved into the correct position with respect to the sprocket 14-3. This can be done by a calibrating unit 26b16, which allows to vary the nominal value signal transmitted from the positioning device control unit 26b5 to the comparator 26b14. A predetermined speed, e. g. the speed No. 3 is selected in the remote control unit 22. Hereupon, the calibrating unit 26b16 is adjusted by movement of a button 26b17, until the mechanism mover element 30b1 is in the correct position opposite to the sprocket 14-3. After such calibration, setting of each of the keys 1 to 6 of the remote control unit 22 results in a correct positioning of the mechanism mover element 30b1 with respect to the selected sprocket.

It is to be noted that the worm gear 26b7 is a self-locking device. It is possible to move the positioning member 26b1 by rotation of the electric motor 26b6. It is, however, impossible to rotate the motor 26b6 by axial force onto the positioning member 26b1, e. g. by the spring 30b3. This is of importance, because the motor may he deenergized immediately after the mechanism mover element 30b1 has arrived in its desired position corresponding to the selected speed as selected in the remote control unit 22. Such, no electric power is necessary for maintaining a desired position of the mechanism mover element 30b1 after this position has once been achieved. This is most desirable, because the battery 26b18 is charged only, when a displacement of the chain is required in response to a setting a new key in the remote control unit 22.

It is to he noted that the positioning device 26a is based on the same electrical and mechanical principles as described above for the positioning device 26b. Therefore, a description of the positioning device 26a in detail is not necessary.

It is to be noted, however, that the positioning device 26a may avoid as indicated in Fig. 1 the subunit 26b4, because the positioning device 26a may be powered by the battery 26b18. It is, moreover, possible to use the positioning device control unit 26b5 also for control of the positioning device 26a. So, the positioning device 26a can be reduced to the electric motor and the worm gear.

In Fig. 4, there is shown a liquid crystal display 46b with a plurality of liquid crystal elements 1 to 6. By this liquid crystal display one can either indicate the selected speed or the actual speed provided by the mechanism mover element 30b1 or both. It is also possible that after setting a key in the remote control unit 22, the respective key is illuminated such as to inform the driver on the selected speed and to activate a respective element of the liquid crystal display 46b as soon as the mechanism mover element 30b1 is correctly positioned with respect to the selected sprocket and the chain has been moved on the respective sprocket. Such, the driver has a control that after selection of a certain speed, the chain is actually displaced to the corresponding sprocket.

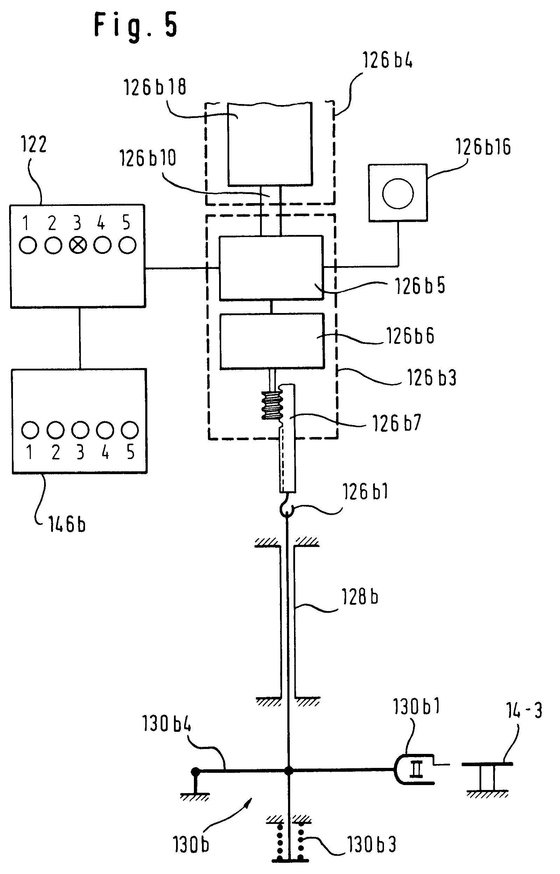

Fig. 5 shows a modified embodiment. Analogous parts are designated by the same reference numerals as in Fig. 4 increased by 100.

In the embodiment of Fig. 5, the electric motor 126b6 is a so-called step motor or increment motor which makes a predetermined number of equal incremental steps in response to an electric signal. In this case, a feed-back as shown in Fig. 4 is not necessary. The mechanism mover element 130b1 is moved to a respective speed position, if a key of the remote control unit 122 is set without feed-back control. Also in this embodiment, an initial calibration is necessary after the speed change system has been assembled with the respective bicycle in order to make sure that in response to setting a selected key of the remote control unit 122, the mechanism mover element 130b1 is moved to the correct position with respect to the sprocket corresponding to the selected speed. A tip switch 126b16 is connected with the positioning device control unit 126b5. The calibration is effected as follows: In the remote control unit 122, a key is set corresponding to a desired speed, e. g. corresponding to the third speed as indicated in Fig. 5. Thus, the motor 126b6 is energized under the control of the positioning device control unit 126b5. The motor comes to a standstill after a predetermined number if incremental steps have been made. As the speed change system is, however, not yet calibrated, the position of the mechanism mover element does not yet correspond to the sprocket corresponding to the selected speed. Now, the tip switch 126b16 is tipped by hand. In doing so, the mechanism mover element 130b1 is moved by the electric motor 126b6 under the control of the positioning device control unit 126b5, until the mechanism mover element 130b1 is located in correct position opposite the sprocket corresponding to the selected speed. Hereupon, each of the keys of the remote control unit 122 may be set and the mechanism mover element 130b1 is hereupon moved automatically into the position corresponding to the selected speed.

It is to be noted that the direction of rotation of the electric motor must he reversible in order to obtain all speeds in the shortes possible time.

The electric battery may be a dry cell as in common use for bicycle equipment.

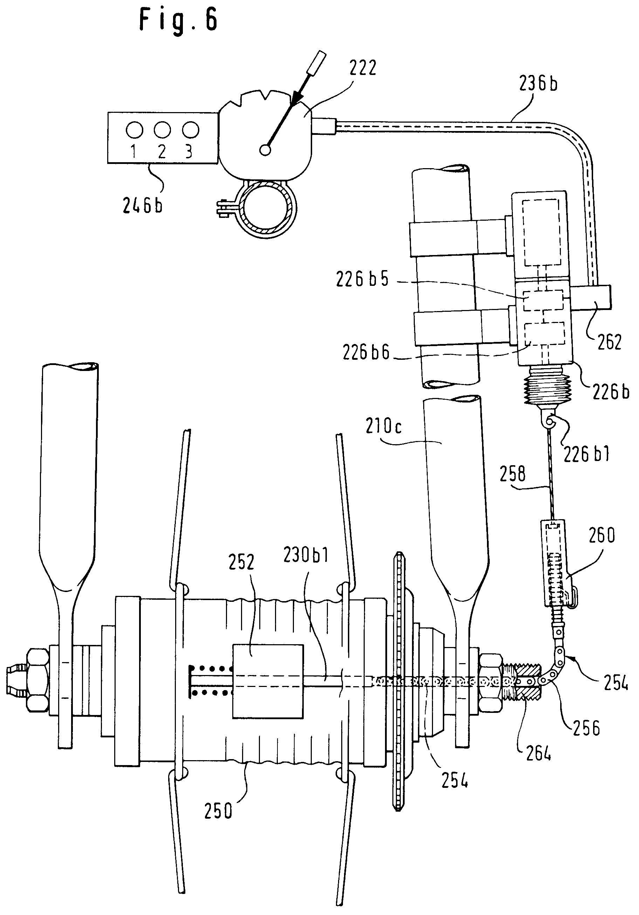

In Fig. 6, there is shown a three-speed bicycle hub which is designated by 250. This bicycle hub accommodates a planetary gear unit 252 which can be set for different transmission ratios by positioning clutch means and/or free wheel units such as pawl-ratchet free wheel units. The change of the transmission ratio of the planetary gear unit 252 is effected by a rod-shaped mechanism mover element 230b1. This mechanism mover element 230b1 is connected by a pulling system 254 with a positioning member 226b1 of a positioning device 226b.

The positioning device 226b and the electric circuitry thereof is of the same type as illustrated and described with respect to Figs. 4 or 5. The pulling system 254 comprises a chain 256 and a cable 258, which are interconnected by a length-adjustable connector 260. The positioning device 226b is fastened to a structural member 210c. The remote control unit 222 is designed as a mechanical switch. The mechanical switch 222 is connected through a Bowden cable 236b with a signal converter 262. This signal converter 262 converts mechanical signals obtained by switching the switch 222 into electrical signals for control of the positioning device control unit 226b5. A display unit 246b is connected with the mechanical switch 222, located on a handle bar.

The chain 256 is introduced into the hub axle 264 through a bore of said hub axle. In case of multi-speed hubs having more than three speeds, it may be necessary to provide more thant one gear change mechanisms and positioning devices. One can e. g. provide in Fig. 6 a second pulling system introduced into the hub through the left-hand end of the hub axle 264, and one can control this second pulling system through an identic or similar system as shown in Fig. 6.

It is to be noted that the illustration of Fig. 3 is only a diagrammatic one. A more detailed design of a multi-speed chain driving mechanism is e. g. shown in US Patent 4,343,613 in which a chain thrower wheel is guided by a parallelogram linkage.

It is further to he noted that also the multi-speed hub of Fig. 6 is only illustrated in a diagrammatic way. A complete multi-speed hub is e. g. shown in US Patent 4,721,013.

A connector device as indicated at 260 of Fig. 6 is illustrated in more detail in US Patent 4,798,098.

While specific embodiments of the invention have been shown and described in detail to illustrate the application of the inventive principles, it will be understood that the invention may be embodied otherwise without departing from such principles.

The reference numerals in the claims are only used for facilitating the understanding and are by no means restrictive.

## Claims

1. A speed change system for a bicycle or a similar vehicle,
comprising
at least one gear change mechanism (30b),
at least one remote control unit (22) accessible to a driver during driving operation,
speed change signal transmission means (24,26b,28b) between said at least one remote control unit (22) and said at least one gear change mechanism (30b),
said at least one gear change mechanism (30b) comprising a mechanism mover element (30b1) movable towards a plurality of mover element positions (14-1,14-3) corresponding to respective speeds,
said speed change signal transmission means (24,26,28b) comprising at least one electrically powered positioning device (26b), said at least one positioning device (26b) having a positioning member (26b1) connected for substantially synchronized movement with said mechanism mover element (30b1),
said positioning member (26b1) being positionable by electric power into a plurality of gear change positions under control by said remote control unit (22),
said mechanism mover element (30b1) being movable into respective mover element positions in response to said positioning member (26b1) being positioned into individual ones of said gear change positions,
flexible connecting means (28b) being provided for connecting said positioning member (26b1) and said mechanism mover element (30b1).

2. A speed change system for a bicycle or a similar vehicle,
comprising
at least one gear change mechanism (30b),
at least one remote control unit (22) accessible to a driver during driving operation,
speed change signal transmission means (24,26b,28b) between said at least one remote control unit (22) and said at least one gear change mechanism (30b),
said at least one gear change mechanism (30b) comprising a mechanism mover element (30b1) movable towards a plurality of mover element position (14-1,14-3) corresponding to respective speeds,
said speed change signal transmission means (24,26b,28b) comprising at least one electrically powered positioning device (26b), said at least one positioning device (26b) having a positioning member (26b1) connected for substantially synchronized movement with said mechanism mover element (30b1),
said positioning member (26b1) being positionable by electric power into a plurality of gear change positions under control by said remote control unit (22),
said mechanism mover element (30b1) being movable into respective mover element positions in response to said positioning member (26b1) being positioned into individual ones of said gear change positions,
mechanical pulling means (28b) being provided for connecting said positioning member (26b1) and said mechanism mover element (30b1).

3. A speed change system for a bicycle or a similar vehicle,
comprising
at least one gear change mechanism (30b),
at least one remote control unit (22) accessible to a driver during driving operation,
speed change signal transmission means (24,6b,28b) between said at least one remote control unit (22) and said at least one gear change mechanism (30b),
said at least one gear change mechanism (30b) comprising a mechanism mover element (30b1) movable towards a plurality of mover element positions (14-1,14-3) corresponding to respective speeds,
said speed change signal transmission means (24,26b,28b) comprising at least one electrically powered positioning device (26b), said at least one positioning device (26b) having a positioning member (26b1) connected for substantially synchronized movement with said mechanism mover element (30b1),
said positioning member (26b1) being positionable by electric power into a plurality of gear change positions under control by said remote control unit (22),
said mechanism mover element (30b1) being movable into respective mover element positions in response to said positioning member (26b1) being positioned into individual ones of said gear change positions,
mechanical push-pull means being provided for connecting said positioning member (26b1) and said mechanis mover element (30b1).

4. A speed change system as set forth in one of claims 1 to 3,
said positioning member (26b1) and said mechanism mover element (30b1) being mechanically connected by one of a wire element and cable element.

5. A speed change system as set forth in one of claims 1 to 3,
said positioning member (26b1) and said mechanism mover element (30b1) being connected through a Bowden wire element (28b).

6. A speed change system as set forth in one of claims 1 to 5,
said electrically powered positioning device (26b) comprising an electric motor (26b6), an electronic positioning device control unit (26b5) and a power unit (26b18).

7. A speed change system as set forth in claim 6,
positioning gear means (26b7) being provided between said electric motor (26b6) and said positioning member (26b1).

8. A speed change system as set forth in claim 7,
said positioning gear means (26b7) being self-locking positioning gear means permitting movement of said positioning member (26b1) by said electric motor (26b6) through said positioning gear means (26b7) and prohibiting movement of said electric motor (26b6) by said positioning member (26b1) through said positioning gear means (26b7).

9. A speed change system as set forth in one of claims 6 to 8,
said power unit (26b18) comprising an electric battery (26b18).

10. A speed change system as set forth in one of claims 6 to 9,
said electric power unit (26b18) being separable from said electrically powered positioning device (26b).

11. A speed change system as set forth in one of claims 1 to 10,
said electrically powered positioning device (26b) having an external shape of one of a rod and a tube.

12. A speed change system as set forth in claim 11,
said rod or tube having a substantially cylindrical cross-section.

13. A speed change system as set forth in claim 12,
said cylindrical cross-section having a diameter not substantially exceeding the diameter of an adjacent structural rod member (10c) or tube member (10c) of a framework (10) of said bicycle or similar vehicle.

14. A speed change system as set forth in one of claims 1 to 13,
said positioning device (26b)being provided with fastening means (40b,26b11) for fastening said positioning device (26b) to a structural tube or rod member (10c) of a framework (10) of said bicycle or similar vehicle.

15. A speed change system as set forth in one of claims 11 - 14,
said rod- or tube-shaped positioning device (26b) having a longitudinal axis, fastening means (40b,26b11) being provided for fastening said rod- or tube-shaped positioning device (26b) to a rod- or tube-shaped structural member (10c) of a framework (10) of said bicycle or similar vehicle, such that said axis of said tube- or rod-shaped positioning device (26b) is substantially parallel to an axis of the respective tube- or rod-shaped structural member (10c).

16. A speed change system as set forth in one of claims 11 to 15,
said positioning member (26b1) being movable substantially parallel to or along an axis of said tube- or rod-shaped positioning device (26b).

17. A speed change system as set forth in one of claims 1 to 16,
said electrically powered positioning device (26b) comprising two subunits (26b3,26b4), a first subunit (26b3) including an electric motor (26b6) and said positioning member (26b1) and a second subunit (26b4) including an electric power unit (26b18), said second subunit (26b4) being separably fastened to at least one of said first subunit (26b3) and a structural member (10c) carrying said first subunit (26b3), said second subunit (26b4) being separable from and reassemblable with said at least one of said first subunit (26b3) and said structural member (10c) of said bicycle or similar vehicle substantially without the aid of a tool.

18. A speed change system as set forth in one of claims 1 to 17,
comprising at least two gear change mechanisms (30a,30b) with respective mechanism mover elements (30b1) and a corresponding number of positioning members (26a1, 26b1), said positioning members (26a1,26b1) being positionable by a corresponding number of electric motors (26b6), said electric motors (26b6) being operatively connected with at least one of a common power unit (26b18), a common positioning device control unit (26b5) and a common remote control unit (22).

19. A speed change system as set forth in one of claims 6 to 18,
said positioning device control unit (26b5) being connected with a comparator unit (26b14), said positioning device control unit (26b5) providing a nominal value signal responsive to a selected speed selected by said remote control unit (22), a positioning sensor (34b) being allocated to one of said mechanism mover element (30b1) and said positioning member (26b1) or a further movable member (30b4) movable in substantial synchronization with said one of said mechanism mover element (30b1) and said positioning member (26b1), said positioning sensor (34b) providing an actual value signal in response to a respective sensed position, said nominal value signal and said actual value signal being compared by said comparator unit (26b14), said comparator unit (26b14) providing a stop signal for said positioning device (26b) at a predetermined relationship of said nominal value signal and said actual value signal.

20. A speed change system as set forth in one of claims 1 to 19,
said positioning device (26b) comprising a calibration unit (26b16) permitting manual control of said positioning device (26b),
such that upon selection of a predetermined speed at said remote control unit (22) said electric positioning device (26b) moves said mechanism mover element (30b1) to a position corresponding to the selected speed.

21. A speed change system as set forth in one of claims 1 to 20,
said remote control unit (22) comprising an electronic keyboard (22), said electronic keyboard (22) being connected with said positioning device (26b) through electronic data transmission means (36b).

22. A speed change system as set forth in one of claims 1 to 20,
said remote control unit (22) comprising a mechanical switch (222), said mechanical switch being connected by mechanical transmission means (236b) with a signal converter (262) allocated to said positioning device (26b), said signal converter (262) converting mechanical positioning signals supplied by said mechanical switch (222) through said mechanical transmission means (236b) to said signal converter (262) into electronic signals, said electronic signals being fed to said positioning device (26b).

23. A speed change system as set forth in one of claims 1 to 22,
comprising a liquid crystal display unit (46b) indicating an actual condition of at least one of said remote control unit (22), said positioning device (26b) and said gear change mechanism (30b).

24. A speed change system as set forth in one of claims 1 to 23,
said gear change mechanism comprising hub gear means (252) provided inside a free wheel driving hub (250) of a driven wheel, said hub gear means (252) being switchable to different transmission ratios in response to movement of said mechanism mover element (230b1).

25. A speed change system as set forth in one of claims 1 to 23,
said gear change mechanism (30b) comprising a chain drive unit (14,16,18) with a driving chain (16), said driving chain (16) being in driving engagement with a pedal-side sprocket unit (18) and with a wheel-side sprocket unit (14) , at least one of said sprocket units (14,18) comprising a plurality of sprockets, said mechanism mover element (30b1) being engageable with said chain (16) for displacing said chain (16) between different sprockets (14-1,14-2,14-3) of the respective sprocket unit (14) in response to selection of different speeds at said remote control unit (22).

26. A speed change system for a bicycle or a similar vehicle,
comprising
at least one gear change mechanism (30b),
at least one remote control unit (22) accessible to a driver during driving operation,
speed change signal transmission means (24,26b,28b) between said at least one remote control unit (22) and said at least one gear change mechanism (30b),
said at least one gear change mechanism (30b) comprising a mechanism mover element (30b1) movable towards a plurality of mover element positions (14-1,14-3) corresponding to respective speeds,
said speed change signal transmission means (24,26,28b) comprising at least one electrically powered positioning device (26b) , said at least one positioning device (26b) having a positioning member (26b1) connected for substantially synchronized movement with said mechanism mover element (30b1),
said positioning member (26b1) being positionable by electric power into a plurality of gear change positions under control by said remote control unit (22),
said mechanism mover element (30b1) being movable into respective mover element positions in response to said positioning member (26b1) being positioned into individual ones of said gear change positions,
said positioning device (26b) comprising a calibration unit (26b16) permitting manual control of said positioning device (26b),
such that upon selection of a predetermined speed at said remote control unit (22) said electric positioning device (26b) moves said mechanism mover element (30b1) to a position corresponding to the selected speed.
